# EUROPEAN PATENT APPLICATION

(11) **EP 4 036 598 A1**
(43) Date of publication of application: **03.08.2022**
(21) Application number: 21154585.0
(22) Date of filing: 01.02.2021
(51) Int. Cl.: G01S 7/497, H04B 10/073

(54) **METHOD FOR TESTING OF AN OPTICAL RECEIVER SYSTEM, PARTICULARLY OF A LIGHT DETECTION AND RANGING SYSTEM**

(71) Applicant: Renesas Electronics America Inc., Milpitas, California 95035 (US)
(72) Inventor: Tavano, Giuseppe, 80992 München (DE); Germic, Leonard, 90409 Nürnberg (DE)
(74) Representative: Lippert Stachow Patentanwälte Rechtsanwälte Partnerschaft mbB

(57) **Abstract**

The invention relates to a Method for testing of an optical receiver system (1), particularly of a Light Detection and Ranging System,
wherein the optical receiver system (1) comprises multiple receiver channels (2) and a Phase-Locked Loop circuit (3) for adjusting a clock signal (4) generated by an oscillator, wherein each receiver channels (2) comprises an amplifier (5) for amplifying a signal received by an associated optical receiver (6) and an analog-to-digital converter (7),
the method comprising the steps of:
disabling the optical receivers (6) associated to the optical receiver channels (2),
disabling the clock signal (4) for the Phase-Locked Loop circuit (3),
enabling multiple receiver channels (2),
detecting the noise signal at the output of each receiver channel (2) .

## Description

The invention relates to a method for testing of an optical receiver system, particularly of a Light Detection and Ranging (Lidar) System.

Light detection and ranging (Lidar) systems, also called laser detection and ranging (Ladar) systems, measure the distance to a target by illuminating the target with pulsed laser light and measuring the reflected pulses with an optical sensor. Differences in laser return times and wavelength can then be used to make 3-D representations of the target. Lidar systems have become popular in automotive applications, for example in advanced safety systems. A Lidar system is for example used to scan the surroundings of a car to detect any obstacles on a collision course with the car and issue a warning to the driver and/or to initiate an emergency brake. Lidar systems are often used in autonomous cars for controlling and navigation purposes. In such automotive applications it is crucial that the Lidar system is highly available and precise with a minimum of detection errors.

The emitting system of the light detection and ranging system comprises a light source, particularly a laser source like a laser diode, for emitting the light signal to the surroundings of the light detection and ranging system. This emitting light signal is reflected or scattered by objects in the surroundings of the light detection and ranging system.

The optical receiver system of the light detection and ranging system usually comprises or is connected to a string of optical sensors, which are for example arranged in the front part of an automobile. The optical receiver system comprises at least one optical receiver channel, which is connectable to a respective optical sensor. Usually, the optical receiver system comprises a separate optical receiver channel for each optical sensor. A solid-state optical receiver comprises multiple optical receiver channels in the same die.

The higher number of receivers allows the improvement of the field of view by having each optical receiver channel acquiring the information from one pixel, e.g. photo diode, per time. The higher the number of channels, i.e. photo-diode plus optical receiver channel, the bigger the field of view.

The field of view further depends on the focal length of a lens system associated with the optical receivers. The lens system maps the surroundings onto the photo sensitive area of the respective optical receivers, i.e. photo-diodes. The more densely packed the optical receivers are, the higher the angular resolution of the mapped image and thus smaller objects within the image be resolved. Thus, the more densely packed the optical receivers are, the less they are exposed to light, the smaller the amplitude of the analog signal to be detected is. This requires a small noise floor in order to be capable to separate the noise and signal.

The optical receiver system amplifies the signal of the optical sensor before processing the optical sensor signal. The amplified optical sensor signal is usually converted from the analog domain to the digital domain by an analog-to-digital converter and afterwards being processed by a digital signal processor or microprocessor. Therefore, each optical receiver channel comprises a separate amplifier system for amplifying the respective optical sensor signals.

High performance Lidar systems, as used in autonomous cars for controlling and navigation purposes, must be highly available with a minimum of detection errors. To fulfill the requirements of such high performance Lidar systems the intrinsic circuit noise of the analog front-end from the optical receiver to the analog-to-digital converter must be monitored for the manufactured optical receiver systems before integration and use in the Lidar system. The noise floor defines the smallest optical signal that can be read and therefore the maximal distance that can be covered by the optical receiver system in order to map the surroundings. It is essential during production to test the noise parameter to make sure that all devices shipped to customers are performing according to customers specification.

Testing the intrinsic noise is challenging because other elements, like clocks used for driving the analog-to-digital converter, introduce additional unwanted noise contribution. This is for example due to the switching activity (transient spikes) that couples into the ground of the printed circuit board through the routing lines and by means of the Input-Output (IO) cell that is driven at the clock input pin. However, elements like the clock are required as without it the system is not anymore functional. The analog-to-digital converter clock is required to make sure that the analog-to-digital converter is working properly. Usually, the noise test would be executed by acquiring the intrinsic noise with the analog-to-digital converter when no signal is applied at the photo-diode input. Due to the running external clock for the analog-to-digital converter, the total root-means-square (rms) noise after acquisition, i.e. digitization of the analog signal via the analog-to-digital converter, is much higher than the expected value.

Usually, to guarantee the Lidar system is precise enough (up to centimetres), the analog-to-digital converter clock has to run at hundreds of Megahertz. In fact, the higher the clock speed, the better it is possible to time-resolve the incoming pulse and therefore calculate the target's distance. Since the analog-to-digital converter clock is preferably of some hundreds of Megahertz, in many embodiments a Phase-Locked Loop (PLL) circuit is used in combination with a precise low frequency quartz oscillator. The low frequency quartz oscillator for example runs at 25 Megahertz and the PLL converts this clock signal to the required higher frequency.

One solution to address the problem of unwanted additional noise introduced by the clock input is to measure the intrinsic noise up to the amplifier output of the optical receiver channel, i.e. before the analog-to-digital converter. In this case all analog-to-digital converters are turned off and the external clock can therefore be stopped. The output of the amplifiers of the optical receiver channels can be routed via an internal multiplexer to a test pin. The test pin is connected to a spectrum analyser where the overall spectrum is acquired and integrated over the frequency range of interest. The result of this process is the total rms noise of the optical receiver channel up to the amplifier. However, this test method does not include the noise contribution introduced by the analog-to-digital converter. Furthermore, it is not possible to test all amplifiers at the same time without spending a separate test pin for each amplifier, which is practically impossible if the channel number exceeds 32 or 64. Testing serially and not in parallel has a direct impact on the testing time and therefore on costs.

It is an object of the present invention to provide a method for testing of an optical receiver system to determine the intrinsic noise of the optical receiver system, which is easy to implement, can test all optical receiver channels in parallel and does not introduce additional unwanted noise.

According to the invention the object is solved by a method for testing of an optical receiver system, particularly of a Light Detection and ranging System, wherein the optical receiver system comprises multiple receiver channels and a Phase-Locked Loop circuit for adjusting a clock signal generated by an oscillator, wherein each receiver channels comprises an amplifier for amplifying a signal received by an associated optical receiver and an analog-to-digital converter, the method comprising the steps of:
disabling the optical receivers associated to the optical receiver channels,
disabling the clock signal for the Phase-Locked Loop circuit, enabling multiple receiver channels,
detecting the noise signal at the output of each receiver channel.

The test method according to the invention is used to determine the intrinsic noise of the optical receiver channels.

It is possible to overcome the previously mentioned limitations by forcing the optical receiver system to work even if the Phase-Locked Loop circuit is not in a locked state and not receiving any external input clock. If the Phase-Locked Loop circuit is not locked and not receiving any external input clock it tends to saturate its output frequency to about +/- 20% or +/- 10% of the target frequency. Under this condition, the analog-to-digital converter is still working but receiving a not precise clock. Under the assumption that the noise bandwidth of the intrinsic noise to be detected is much smaller than the analog-to-digital converter sampling frequency, it doesn't matter whether the frequency for the analog-to-digital converter is the target frequency or +/- 20% or +/- 10%. However, in this case it is possible to test the intrinsic noise of all optical receiver channels in parallel, using the hardware already available in the optical receiver system. The method according to the invention measures the intrinsic noise of the complete optical receiver channel, i.e. the amplifier and the analog-to-digital converter without any additional noise introduced by an external clock signal. Furthermore, all optical receiver channels of the optical receiver system can be tested in parallel, which improves the test time and therefore costs. Thus, the invention provides an improved method to test intrinsic circuit noise of the analog front-end of a solid-state Lidar receiver.

According to a preferred variant of the invention the multiple receiver channels and the Phase-Locked Loop circuit are arranged on the same printed circuit board or chip. Thus, the optical receiver system is a solid-state integrated circuit comprising multiple optical receiver channels.

In a further variant the optical receivers are arranged on the same printed circuit board or chip as the optical receiver channels or are arranged on one or more separated printed circuit board or chips, which are electrically connected to the printed circuit board or chip comprising the optical receiver channels.

Pursuant to a further variant of the invention the clock signal for the Phase-Locked Loop circuit is generated by an internal or external oscillator.

According to a variant of the invention the step of disabling the optical receivers comprises a switching-off, disconnecting and/or covering of the optical receivers.

In another variant of the invention the step of disabling the clock signal comprises a switching-off and/or disconnecting of the oscillator from the Phase-Locked Loop circuit.

Pursuant to a preferred variant of the invention the Phase-locked Loop circuit is in an unlocked state during execution of the method.

According to a particular preferred variant of the invention the Phase-Locked Loop circuit comprises an LC-circuit.

In an advantageous variant of the invention the step of detecting the noise signal at the output of each receiver channel is performed at least partially, preferably completely, in parallel.

Pursuant to a variant of the invention the amplifier is a trans-impedance amplifier.

According to a further variant of the invention the detecting of the noise signal at the output of each receiver channel is performed by the system usually processing the signals of the optical receiver channels in normal operation mode. Thus, no additional hardware is necessary for detecting respectively determining the noise of each receiver channel.

In the following the invention will be explained in further detail with respect to an embodiment shown in the attached Figure. It shows:

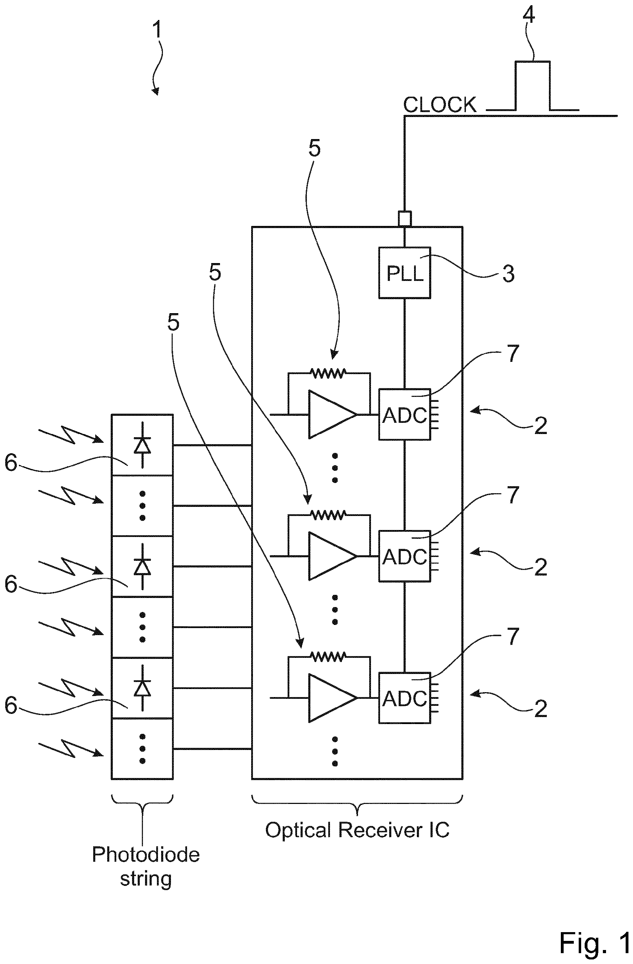

- Fig. 1: a block diagram of an embodiment of an optical receiver system of a Lidar system implementing the method according to the invention.

Fig. 1 shows a block diagram of an embodiment of an optical receiver system 1 of a Lidar system 2 implementing the method according to the invention for testing of an optical receiver system 1, particularly of a Light Detection and Ranging System. The optical receiver system 1 shown in Fig. 1 comprises multiple receiver channels 2, of which three are shown in Fig. 1. Each receiver channel 2 comprises an amplifier 5 for amplifying a signal received by an associated optical receiver 6, like a photo diode. The amplifier 5 preferably is a trans-impedance amplifier (TIA). The receiver channels 2 further comprise an analog-to-digital converter 7 for converting the amplified analog signal of the optical receiver from the analog domain to the digital domain for further processing. The optical receiver system 1 of Fig. 1 further comprises a Phase-Locked Loop (PLL) circuit 3 for adjusting a clock signal 4 generated by an oscillator, particularly for increasing the frequency of clock signal 4.

The test method according to the invention is used to determine the intrinsic noise of the optical receiver channels 2 and comprises the steps of:
disabling the optical receivers 6 associated to the optical receiver channels 2,
disabling the clock signal 4 for the Phase-Locked Loop circuit 3,
enabling multiple receiver channels 2, and
detecting the noise signal at the output of each receiver channel 2.

Advantageously the step of detecting the noise signal at the output of each receiver channel 2 is performed in parallel. Particularly, the detecting of the noise signal at the output of each receiver channel 2 is performed by the system usually processing the signals of the optical receiver channels 2 in normal operation mode.

Due to the disabling of the clock signal 4 the Phase-Locked Loop circuit 3 is operating in an unlocked state. In this case the Phase-Locked Loop circuit 3 tends to saturate its output frequency to about +/- 20% or +/- 10% of the target frequency. Since the Phase-Locked Loop circuit 3 still provides an output signal the analog-to-digital converters 7 of the optical receiver channels 2 are still working, but are receiving a not precise clock signal. Since the noise bandwidth of the intrinsic noise to be detected is much smaller than the analog-to-digital converter 7 sampling frequency, it doesn't matter whether the frequency for the analog-to-digital converter 7 is the target frequency or +/- 20% or +/- 10%. Preferably the Phase-Locked Loop circuit 3 comprises an LC-circuit (inductance-capacitor circuit), which results in a stable clock signal comparable to the target frequency.

Using the method according to the invention it is possible to test the intrinsic noise of all optical receiver channels 2 in parallel, using the hardware already available in the optical receiver system 1. The method according to the invention measures the intrinsic noise of the complete optical receiver channel 2, i.e. the amplifier 5 and the analog-to-digital converter 7 without any additional noise introduced by an external clock signal 4. Thus, the invention provides an improved method to test intrinsic circuit noise of the analog front-end of a solid-state Lidar receiver.

According to the embodiment shown in Fig. 1 the multiple receiver channels 2 and the Phase-Locked Loop circuit 3 are arranged on the same printed circuit board or chip, whereas the optical receivers 6 are arranged on a separate printed circuit board or chip, which are electrically connected to the printed circuit board or chip comprising the optical receiver channels 2.

According to the embodiment of Fig. 1 the clock signal 4 for the Phase-Locked Loop circuit 3 is generated by an external oscillator (not shown).

The step of disabling the optical receivers 6 comprises a switching-off, disconnecting and/or covering of the optical receivers 6 and the step of disabling the clock signal 4 comprises a switching-off and/or disconnecting of the oscillator from the Phase-Locked Loop circuit 3.

### List of reference numerals

- 1: optical receiver system
- 2: receiver channel
- 3: Phase-Locked Loop (PLL) circuit
- 4: clock signal
- 5: amplifier
- 6: optical receiver
- 7: analog-to-digital converter

## Claims

1. Method for testing of an optical receiver system (1), particularly of a Light Detection and Ranging System, wherein the optical receiver system (1) comprises multiple receiver channels (2) and a Phase-Locked Loop circuit (3) for adjusting a clock signal (4) generated by an oscillator, wherein each receiver channels (2) comprises an amplifier (5) for amplifying a signal received by an associated optical receiver (6) and an analog-to-digital converter (7),
the method comprising the steps of:
disabling the optical receivers (6) associated to the optical receiver channels (2),
disabling the clock signal (4) for the Phase-Locked Loop circuit (3),
enabling multiple receiver channels (2),
detecting the noise signal at the output of each receiver channel (2).

2. Method according to claim 1,
wherein the multiple receiver channels (2) and the Phase-Locked Loop circuit (3) are arranged on the same printed circuit board or chip.

3. Method according to claim 1 or claim 2,
wherein the optical receivers (6) are arranged on the same printed circuit board or chip as the optical receiver channels (2) or are arranged on one or more separated printed circuit board or chips, which are electrically connected to the printed circuit board or chip comprising the optical receiver channels (2).

4. Method according to any of claims 1 to 3,
wherein the clock signal (4) for the Phase-Locked Loop circuit (3) is generated by an internal or external oscillator.

5. Method according to any of claims 1 to 4,
wherein the step of disabling the optical receivers (6) comprises a switching-off, disconnecting and/or covering of the optical receivers (6).

6. Method according to any of claims 1 to 5,
wherein the step of disabling the clock signal (4) comprises a switching-off and/or disconnecting of the oscillator from the Phase-Locked Loop circuit (3).

7. Method according to any of claims 1 to 6,
wherein the Phase-locked Loop circuit (3) is in an unlocked state during execution of the method.

8. Method according to any of claims 1 to 7,
wherein the Phase-Locked Loop circuit (3) comprises an LC-circuit.

9. Method according to any of claims 1 to 8,
wherein the step of detecting the noise signal at the output of each receiver channel (2) is performed at least partially, preferably completely, in parallel.

10. Method according to any of claims 1 to 9,
wherein the amplifier (5) is a transimpedance amplifier.

11. Method according to any of claims 1 to 10,
wherein the detecting of the noise signal at the output of each receiver channel (2) is performed by the system usually processing the signals of the optical receiver channels (2) in normal operation mode.
